Europäisches Patentamt

European Patent Office

Office européen des brevets

(11) Publication number: **0 270 302 B1**

## EUROPEAN PATENT SPECIFICATION

(45) Date of publication of patent specification: **08.05.91**   (51) Int. Cl.⁵: **B67D** 1/08, F16L 29/00

(21) Application number: **87310408.7**

(22) Date of filing: **25.11.87**

(54) Coupling.

(30) Priority: **27.11.86 GB 8628442**

(43) Date of publication of application:
**08.06.88 Bulletin 88/23**

(45) Publication of the grant of the patent:
**08.05.91 Bulletin 91/19**

(84) Designated Contracting States:
**CH DE ES FR GB IT LI NL SE**

(56) References cited:
**EP-A- 0 204 362          FR-A- 827 785**
**FR-A- 1 568 991          GB-A- 1 348 654**
**US-A- 3 670 929          US-A- 3 687 161**

(73) Proprietor: **UNILEVER PLC**
**Unilever House Blackfriars P.O. Box 68**
**London EC4P 4BQ(GB)GB**

Proprietor: **UNILEVER NV**
**Burgemeester s'Jacobplein 1 P.O. Box 760**
**NL-3000 DK Rotterdam(NL)CH DE ES FR IT LI**
**NL SE**

(72) Inventor: **Bunschoten, Gerrit Klaas**
**Laan van Zuylenveld 48**
**NL-3611 AJ Oud Zuilen(NL)**
Inventor: **Van der Heyden, Lambertus Gerardus Petrus**
**Kampweg 17**
**NL-3981 EX Bunnik(NL)**

(74) Representative: **Kan, Jacob Hendrik, Dr. et al**
**Unilever N.V. Patent Division P.O. Box 137**
**NL-3130 AC Vlaardingen(NL)**

## Description

The present invention concerns a coupling for interconnecting two hollow bodies, especially a container and a pipe.

EP-A-204 362 describes a liquid product packaging and dispensing assembly in which liquid is pumped from a container via a coupling and through a tube to the point of use. The mouth of the tube is fitted with a non-return valve to prevent leakage of liquid when the tube is uncoupled from the container. In one form, the container may be collapsible and is preferably situated inside a box for convenience during storage and transport.

We have appreciated that various problems exist with such systems employing flexible containers. One problem is that once the tube is uncoupled from the container, the mouth of the latter is open so that air enters as the walls of the container tend to resume their original shape. This means that on reconnection, the pump first draws air which is particularly disadvantageous when the system is part of a time-dependent operation where it is important for liquid to be drawn substantially immediately. Whilst entry of air could be prevented using a pop-return valve, as with stopping leakage from the tube, this does not overcome a second problem, namely that rough handling or dropping of the container after uncoupling results in contents spilling out of the mouth. A non-return valve is inappropriate here because with both normal use and spillage, liquid is caused to exit from the container. Moreover, the use of two non-return valves (one of the container and one for the tube) results in increased flow resistance, requiring a greater pumping capacity. This is because such non-return valves are opened by the liquid pressure differential across them.

A further problem arising with such containers is that on uncoupling the container from the tube, residues of any liquid which has been flowing through the coupling between them are apt to be spilled. This can be hazardous if the liquid is noxious, for example if the liquid is a very alkaline product such as industrial mechanical dishwashing liquid. We have now found that these various problems can be ameliorated by utilising a particular form of coupling.

Although the form of coupling was devised particularly for the application indicated above and is advantageous for that, it could also be employed in other applications where it would be advantageous to provide a coupling preventing leakage from two hollow bodies when these are disconnected and also minimising spillage during disconnection.

In FR-A-1 568 991 there is disclosed a quick coupling system for connecting tubes containing a pressurized fluid such as oil in hydraulic applications. It is a coupling for interconnecting two hollow bodies, the coupling comprising first and second interconnectable members for attachment of each one to an orifice of a respective body so as to allow fluid flow between the interiors of the bodies when interconnected by the coupling and to seal the orifices when uncoupled,

the first interconnectable member comprising a hollow post arranged for the interior of the post to communicate with the interior of the body to which the first member is attached, the hollow post having a closed end and one or more openings behind the end, the first member further comprising a sleeve around the post biassed into a position covering the openings to prevent outflow from the interior of the post and seal the orifice of the said body this sleeve being displaceable against the bias to a position uncovering the opening(s) for flow;

the second interconnectable member comprising a piston within a hollow sheath arranged for the interior of the sheath to communicate with the interior of the body to which the second interconnectable member is attached, the piston being biassed into a position closing an aperture through an end portion of the sheath for sealing the orifice of the body to which the second member is attached, the said piston being displaceable against the bias to a position uncovering the aperture for flow;

the post, sleeve, piston and sheath being configured such that upon connection of the interconnectable members the closed end of the post extends through the aperture in the sheath and displaces the piston against its bias, while the sheath displaces the sleeve against its bias, thereby allowing flow between the hollow interiors of the sheath and the post.

According to the present invention, there is provided a coupling of the above-mentioned kind, which is characterised in that in the first interconnectable member the closed end of the hollow post and the sleeve are cylindrical, and that in the second interconnectable member the aperture through the end portion of the sheath is cylindrical, whereby the closed cylindrical end of the post is a close fit through the said cylindrical aperture in the end portion of the sheath.

GB-A-1,348,654 discloses a beer keg tapping device consisting of a keg unit mountable in the tapping hole of a beer keg and a coupler unit. The keg unit comprises a hollow post and a sleeve around the middle part of the post and biassed into a position covering a number of openings in the hollow post, which may serve as a passage for the beer. The coupler unit comprises a piston in the middle of a hollow sheath, biassed into a position closing an aperture in hollow sheath. The piston is equipped with a pin which collides with the end portion of the hollow post of the keg unit upon connecting both units. The end portion of the hollow sheath has a larger diameter than the end portion of the hollow post so that the beer can flow through the opening between them.

The coupling according to the invention has the advantage that when it is disconnected both orifices are sealed, and it can be constructed to obviate spillage. A close fit of the sheath around the post is valuable for avoiding spillage upon disconnection, and the parts which move relative to each other during disconnection then tend to clean one another. It will generally be the case with such a coupling that as liquid flows from the hollow interior of the post to the hollow interior of the sheath, there is no need for the liquid to enter any space outside those hollow interiors and consequently upon disconnection of the interconnectable members there is substantially no fluid which is outside them and consequently likely to be spilled. A further advantage of such a coupling is that by avoiding the use of non-return valves the flow-rate efficiency is increased.

It will generally be desirable for the various parts to be co-axial, that is to say for the sheath and piston to be co-axial and for the sleeve and post to be co-axial and moreover for all four of them to lie on a common axis when coupled. it is preferable for the end portion of the sheath to be provided with an inwardly directed circumferential lip defining the said aperture at the end of the sheath and fitting closely around the post. Upon disconnection the lip can wipe the post as the latter is drawn through the aperture. The lip can conveniently also define a valve seat against which the said piston within the sheath is biassed.

It will generally not be necessary to provide any part closely surrounding the exterior of the end portion of the sheath and there may well be an axially extending air space around this, possibly with further parts spaced radially outwardly from the end portion of the sheath by such an air space.

As mentioned above, the coupling of the present invention was particularly devised for one interconnectable member (which may be either the first or the second of the two interconnectable members) to be attached to an orifice of a container. This may in particular be a deformable container such as a bag which will progressively collapse as it is emptied. The other of the two interconnectable members can then be connected to a tube or pipe intended to be placed in communication with the container by means of the coupling. As used herein, the terms "pipe" and "tube" can be taken to be synonymous.

The present invention extends to a handling system for a liquid product, which system comprises a container for the product, apparatus including a tube to receive product from the container, and a coupling as set forth above with one of the two interconnectable members of the coupling attached to an orifice of the container and the other of the two interconnectable members of the coupling attached to the tube. Then, the coupling allows flow from the container to the tube and also disconnection of the container from the apparatus while minimising spillage. Although it is particularly envisaged that the coupling will be employed to allow flow from the container to the tube, there is no reason why the coupling could not be used in a reverse arrangement where it was desired to pump liquid into the container. It will generally be the case, however, the there is flow in only a single direction at any one instant with no provision for counter-current flow of any kind.

In a further development of the invention, one of the two interconnectable members includes or is connected to a chamber having means for detecting the the presence of liquid in the chamber. Preferably this will be the interconnectable member which is connected to a tube. This preferred feature is useful in systems handling a liquid product where it is necessary or desirable to detect that the container has emptied and then shut off a pump and/or sound an alarm calling for the container to be replaced. For detecting liquid in the chamber, the chamber may contain spaced apart electrodes so that the liquid when present provides a conductive path between the electrodes. Whatever means are used to detect the presence of liquid, it may be desirable for the chamber to have a valve which is biassed closed but arranged to open to admit air to the chamber in the event that a pre-determined sub-atmospheric pressure is created within the chamber, for example if a pump drawing from the chamber is continuing to run when the supplying container is empty.

The present invention will now be better explained by way of the following exemplary but non-limiting embodiment, and with reference to the accompanying drawings in which:-

Figure 1 shows in axial cross section, a member of a coupling embodying the invention, when attached to a deformable bag;

Figure 2 shows in axial cross section, a section member of a coupling embodying the invention, when attached to a pipe;

Figure 3 shows in axial cross section, the apparatus of Figures 1 and 2 when interconnected in accordance with the invention;

Figure 4 shows in axial cross section, the first and second members of a coupling which is a second embodiment of the invention, with liquid in the first member; and

Figure 5 shows in axial cross section, the coupling of Figures 1 and 2 when the two members of the coupling are interconnected.

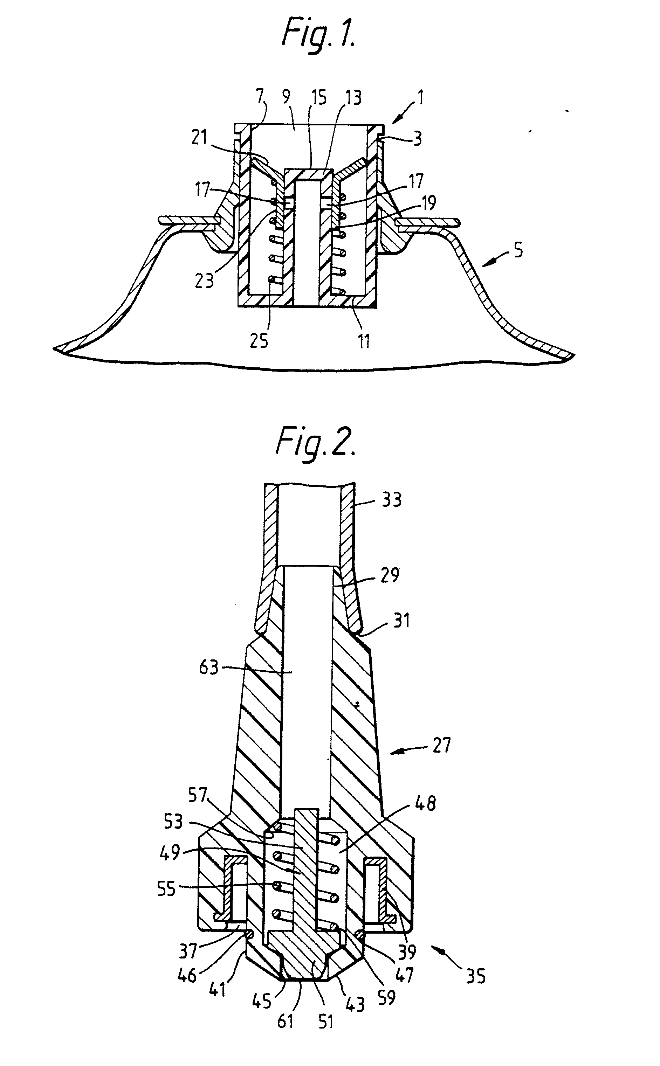

Figure 1 shows a first member 1 of a coupling inserted in orifice 3 of a deformable bag 5, in sealed relation thereto. The first member and bag (fragment only shown) are substantial rotationally symmetric about the central vertical axis. The first member comprises a cylindrical wall 7 defining a chamber 9, from the floor 11 of which extends a post 13, closed at the top by a surface 15. Below this surface radial openings 17 are provided in the post. These openings are closed by a sleeve 19 which is fabricated to be splayed outwardly at its top end 21. The sleeve 19 is displaceable axially along the post. It is biassed by means of a compression spring 25 surrounding the exterior surface 23 of the sleeve; this spring biasses the sleeve to a position closing the radial openings 17 and the sleeve and post thus constitute a valve. As shown, any contents in the bag are unable to escape since the only possible exit, namely the openings 17, are blocked by the sleeve. Furthermore, any attempt by the gab to reinflate is prevented by the sleeve 19, which will not be displaced by suction attempting to draw excess air into the bag.

The second member 27 shown in Figure 2 is likewise substantially rotationally symmetric about the central vertical axis. The top end 29 is sealably fixed in the open end 31 of tube (fragment only shown) 33. The lower end 35 of the second member is provided with an annular recess 37 and a flexible washer 39. This arrangement serves to effect sealing to the first member as described in more detail hereinbelow. At the bottom-most part of the lower end of the second member, there is a protrusion 41 constituting a sheath and having an inwardly and downwardly directed lip 43 defining a circular aperture 45 at its end. Further to effect sealing between the first and second members (to be described further), a rubber 0-ring 46 is located within an annular groove 47 on the outside of the sheath 41.

Within the interior chamber 48 of the hollow sheath 41 is a piston 49 having a head 51 and a shaft 53. A compression spring 55 located within the chamber 48, surrounds the shaft and impinges on shoulders 57 and 59 of the chamber and piston head respectively. The head is made of a material such that as the spring urges it downwardly, a nipple 61 thereon closes the hole 45, thereby creating a seal. Thus, any contents in the tube cannot escape via channel 63 leading to the chamber. The lip 43 constitutes a valve seat against which the piston 49 is urged.

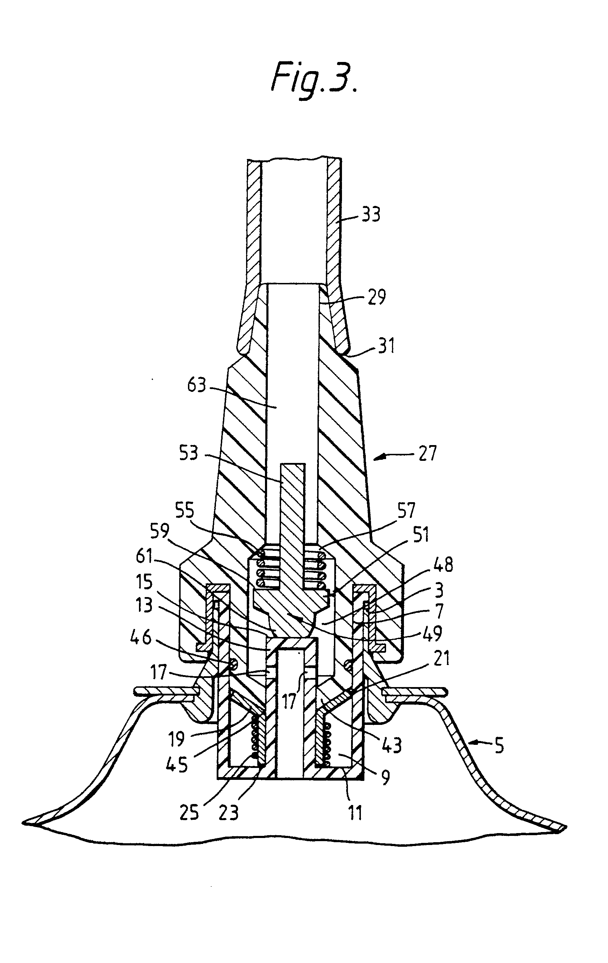

As depicted in Figure 3, the first and second members are coupled by locating the top of the cylindrical wall 7 of the first member within the annular recess 37 of the second member in a snug fitting arrangement. Sealing between the two members is brought about by abutment between the top edge of the cylindrical wall and the washer 39, and by compression of the 0-ring 46 against the upright inner surface of said cylindrical wall. The first and second members may be removably held together simply by interference fit. Alternatively, this may be effected by means of screw threading or by a bayonet-fit arrangement (neither shown) in a manner which will readily be apparent to those skilled in the art.

From Figure 3, it will be seen that the closed top surface 15 of the post 13 acts upon the nipple 61 of the piston, forcing it to retract against the bias of the spring 59 which is thereby compressed. At the same time, the lower surface of the end portion of the sheath 41 engages the upper splayed end 21 of flexible sleeve 19 and pushes it downwardly against the bias of the spring 25, which is thereby compressed. Retraction of the sleeve uncovers the openings 17 in the post, which in this configuration are now situated within chamber 48. Thus, it will be appreciated that the head 51 of the piston, in co-operation with the spring 59 and the hole 45, act as a valve which is closed when the first and second members are uncoupled. However, in the coupled state, the upper surface of the post acts to open said valve. Similarly, the flexible sleeve in combination with the spring 25 and the opening 17, function as a further valve which is also closed when the two members are uncoupled. In the coupled position, the end portion of the sheath 41 acts to open this further valve.

The result of this operation is that when the first and second members are apart, no contents of either the bag or the tube can escape. When they are coupled, the valves open, interconnecting the bag and tube so that fluid can pass therebetween. Flow is direct from the hollow inside of the post 13, through the openings 17, to the interior chamber 48 of the sheath 41 and then to the channel 63, or vice versa. It will be appreciated that in the coupled state, fluid can pass the piston head 51 since the shoulder 59 is not flush with the chamber walls. However, to facilitate fluid flow, axial holes or circumferential grooves (neither shown) may be situated in the piston shoulder, provided they are in such positions as not to prevent the piston nipple from forming a sealing with the hole 45. This can also serve to circumvent any resistance to flow which is presented by the spring 55 in its compressed state. Upon disconnection the two members of the coupling separate without liquid being able to flow out from the hollow interiors of the post and sheath into any surrounding space and moreover the movement of the lip 43 along the post 13 tends to clean the post.

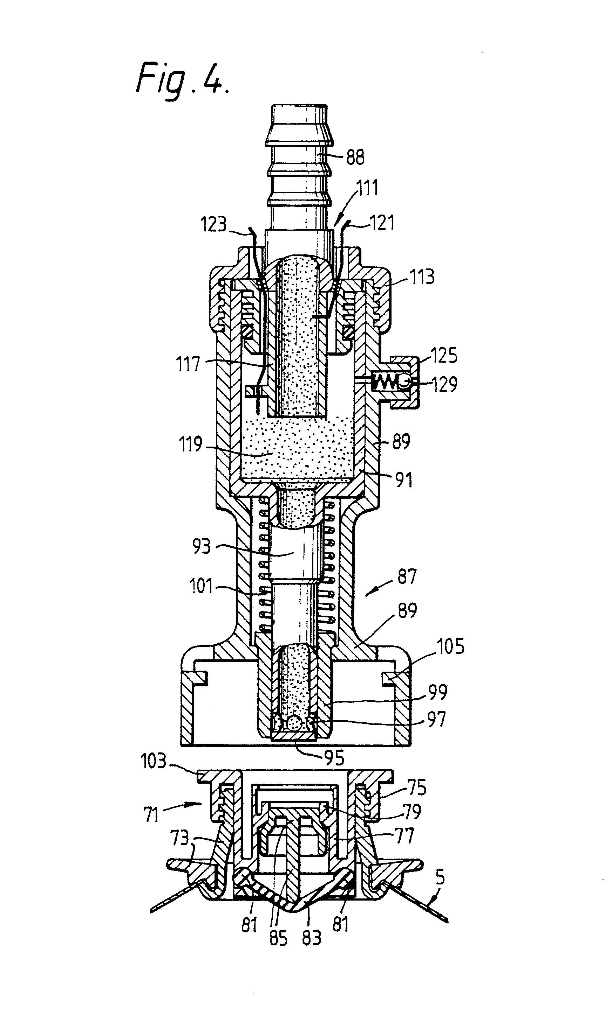

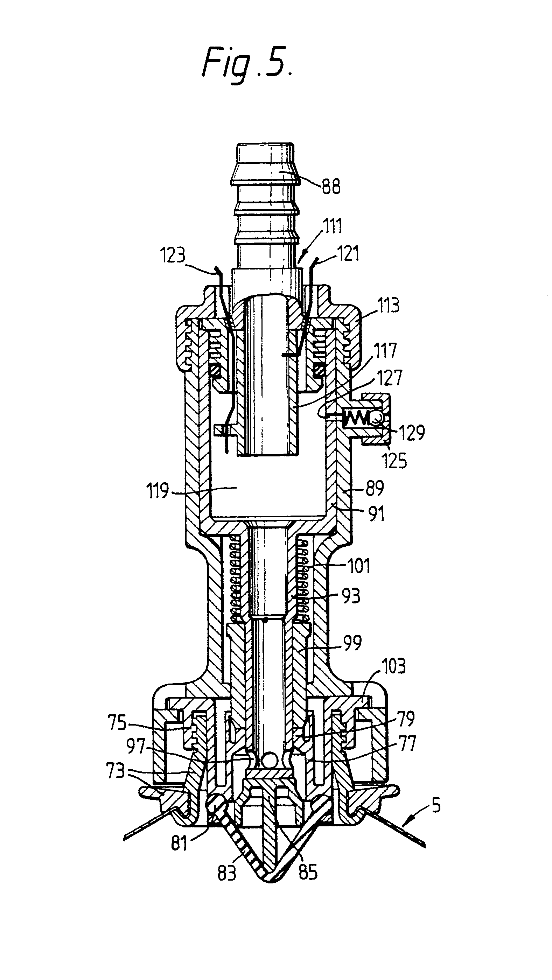

Figures 4 and 5 show a second embodiment which is the converse of that in Figures 1 to 3. The coupling's second interconnectable member 71 (i.e. the member with piston and sheath) is inserted in the orifice of a deformable bag 5, in sealed relation to it. A collar 73 provides a tubular mouth sealed to the bag and a fitting 75 is screw-threaded to this collar. An inner part of this fitting provides a sheath 77 with an inwardly directed lip 79. The fitting 75 is shaped to retain enlarged heads 81 at each end of an elastic strip 83. The elastic strip 83 biasses a piston 85 upwardly to seat against the lip 79 and so close the aperture defined by this lip.

The first interconnectable member 87 of the coupling has a spigot 88 for connection indirectly to a tube (not shown) receiving liquid from the container. The second member 87 has an outer housing 89 accommodating an inner sleeve 91 from which a hollow post 93 extends. The end 95 of the hollow post is closed and just behind the end 95 are radial holes 97. These are surrounded by a sleeve 99 displaceable axially against the bias of a spring 101 to expose the holes 97.

The coupled condition of these two interconnectable members is shown in Figure 5. The fitting 75 of the first interconnectable member and the outer case 89 of the second member are shaped to make a bayonet-type connection coupled by pushing the member together and then twisting to engage radially outwardly projecting lugs 103 of the fitting 75 behind radially inwardly projecting lugs 105 of the housing 89. As the two interconnectable members are pushed together, the flat end 95 of the post 93 presses on the piston 85 unseating it from the lip 79. The end portion of the post 95 passes through the aperture defined by the lip 79 into the hollow space 107 within the sheath 77 and the extremity of the lip 79 contacts the extremity of the sleeve 99 and causes it to retract against the bias of spring 101. The end face of the fitting 73 abuts, and seals against, the housing 89. Upon uncoupling, the lip 79 wipes the end portion of the post as that end portion is withdrawn through the aperture defined by the lip 79.

The first interconnectable member incorporates a conductivity cell used to set off an alarm if the liquid in the container runs out. An end piece 111 made of electrically insulating material extends into the sleeve 91 and is retained there by a screwcap 113. The end piece 111 includes the spigot 88 to attach to a flexible tube. The end piece 111 includes a short pipe 117 through which liquid is drawn out of the chamber 119. An electrode 121 extends through the end piece 111 and is exposed to liquid on the inside of the pipe 117. A second electrode 123 also extends through the end piece but is on the outside of pipe 117. When there is an adequate supply of liquid, the pipe 117 and chamber 119 are both sufficiently filled with liquid to provide a conductive path between the two electrodes. If, however, the supply of liquid from the container 5 runs out, a pump continuing to suck through the tube connected to the spigot 88 will create a sub-atmospheric pressure in the chamber 119.

On the side of the housing 89 a small lateral port closed by a screwcap 125 communicates with a narrow passageway 127 leading into the chamber 119. The screwcap 125 has a central aperture which provides a seat for a sealing ball 129 of a conventional non-return valve which in normal operation closes the central aperture in the cap 125 and blocks any leakage via the passageway 127. The non-return valve is arranged so that it will open in response to a sub-atmospheric pressure within the chamber 119 of approximately 0.3 bar below atmospheric. Such a sub-atmospheric pressure, sufficient to unseat the non-return valve, can be created by pump suction when the supply of liquid runs out. When the this happens the ball 129 unseats, the air is admitted to the chamber 119 until the eventual entry of air into the tube 117 breaks the liquid conductive path between the electrodes 121, 123. This may occur when sufficient air has been admitted to expose the extremity of electrode 123, as illustrated in Figure 4. Failing that air will enter the short tube 117 until the electrode 121 is no longer contacted by liquid. In either event, when electric current ceases to flow between the electrodes, automatic control circuitry shuts off the pump and sounds an alarm to warn an operator that the container 5 is empty and must be replaced.

In both embodiments above, virtually all the parts except for the compression springs can be moulded from plastics material.

Modifications are possible. In particular, in the coupling of Figures 4 and 5, the elastic strip 83 could be replaced by a compression spring accommodated in an apertured fixed housing and acting on a suitably shaped piston. Also, instead of the conductivity cell formed by electrodes 121, 123 within chamber 119, a space within this chamber could be partitioned off by a pressure-tight flexible membrane, arranged to flex and thus slightly move its position in response to a sub-atmospheric pressure in the remainder of the chamber 119. Movement of the membrane could then operate a microswitch in the partitioned-off part of the chamber.

**Claims**

1.  A coupling for interconnecting two hollow bodies, the coupling comprising first and second interconnectable members for attachment of each one to an orifice of a respective body so as to allow fluid flow between the interiors of the bodies when interconnected by the coupling and to seal the orifices when uncoupled,

the first interconnectable member (87) comprising a hollow post (93) arranged for the interior of the post to communicate with the interior of the body to which the first member is attached, the hollow post having a closed end (95) and one or more openings (97) behind the end, the first member further comprising a sleeve (99) around the post biassed into a position covering the openings to prevent outflow from the interior of the post and seal the'orifice of the said body, this sleeve (99) being displaceable against the bias to a position uncovering the opening(s) for flow;

the second interconnectable member (71) comprising a piston (85) within a hollow sheath (77) arranged for the interior of the sheath to communicate with the interior of the body to which the second interconnectable member is attached, the piston (85) being biassed into a position closing an aperture through an end portion (79) of the sheath for sealing the orifice of the body to which the second member is attached, the said piston being displaceable against the bias to a position uncovering the aperture for flow;

the post (93), sleeve (99), piston (85) and sheath (77) being configured such that upon connection of the interconnectable members (87, 71) the closed end (95) of the post (93) extends through the aperture in the sheath (77) and displaces the piston (85) against its bias, while the sheath (77) displaces the sleeve (99) against its bias, thereby allowing flow between the hollow interiors of the sheath (77) and the post (93), characterized in that in the first interconnectable member (87) the closed end (95) of the hollow post (93) and the sleeve (99) are cylindrical, and that in the second interconnectable member (71) the aperture through the end portion (79) of the sheath (77) is cylindrical, whereby the closed cylindrical end (95) of the post (93) is a close fit through the said cylindrical aperture in the end portion (79) of the sheath (77).

2. A coupling according to claim 1, wherein the piston (85) is biassed by an elastic element (83).

3. A coupling according to any one of the preceding claims wherein the end portion (79) of the sheath is provided with an outwardly directed circumferential lip which fits closely around the sleeve (99).

4. A coupling according to any one of the preceding claims wherein one of the two said interconnectable members includes or is connected to a chamber having means for detecting presence or absence of liquid.

5. A coupling according to any one of the preceding claims wherein one of the two interconnectable members is attached to an orifice of a container and the other of the interconnectable members is attached to a tube.

6. A coupling according to claim 5 wherein the container is a deformable bag.

**Revendications**

1. Un raccord pour interconnecter deux corps creux, le raccord comprenant un premier et un second éléments interconnectables pour fixer chacun d'eux à un orifice d'un corps respectif de façon à permettre un écoulement de fluide entre les intérieurs des corps lorsqu' ils sont couplés par le raccord et pour obturer les orifices hermétiquement lorsqu'ils sont découplés,
le premier élément interconnectable (87) comprenant un montant creux (91) adapté à l'intérieur du montant pour communiquer avec l'intérieur du corps auquel le premier élément est attaché, le montant creux ayant une extrémité fermée (95) et une ouverture ou davantage (97) derrière l'extrémité, le premier élément comprenant en outre une bague (99) autour du montant placée dans une position couvrant les ouvertures pour empêcher l'écoulement depuis l'intérieur du montant et obturer l'orifice dudit corps, cette bague (99) étant déplaçable dans le sens résistant vers une position découvrant l'ouverture pour écoulement ;
le second élément interconnectable (71) comprenant un piston (85) dans un manchon creux (77) disposé à l'intérieur du manchon pour communiquer avec l'intérieur du corps auquel le second élément interconnectable est attaché, le piston (85) étant placé dans une position fermant une ouverture à travers une partie d'extrémité (79) du manchon pour obturer l'orifice du corps auquel le second élément est attaché, ledit piston étant déplaçable dans le sens résistant vers une position découvrant l'ouverture pour l'écoulement ;

le montant (93), la bague (99), le piston (85) et le manchon (77) étant configurés de façon à ce qu'à la connexion des éléments interconnectables (87, 71) l'extrémité fermée (95) du montant (93) s'étende à travers l'ouverture dans le manchon (77) et déplace le piston (85) dans le sens résistant, tandis que le manchon (77) déplace la bague (99) dans le sens résistant, permettant de ce fait l'écoulement entre les intérieurs creux du manchon (77) et du montant (93), caractérisé en ce que dans le premier élément interconnectable (87) l'extrémité fermée (95) du montant creux (93) et la bague (99) sont cylindriques et que dans le second élément interconnectable (71) l'ouverture à travers la partie d'extrémité (79) du manchon (77) est cylindrique, par quoi l'extrémité cylindrique fermée (95) du montant (93) est en ajustement fin à travers ladite ouverture cylindrique dans la partie d'extrémité (79) du manchon (77).

2. Un raccord selon la revendication 1, dans lequel le piston (85) est dévié par un élément élastique (83).

3. Un raccord selon l'une quelconque des revendications précédentes, dans lequel la partie d'extrémité (79) du manchon est munie d'un rebord périphérique dirigé vers l'extérieur qui s'ajuste étroitement autour de la bague (99).

4. Un raccord selon l'une quelconque des revendications précédentes, dans lequel un desdits deux éléments interconnectables inclut ou est connecté à une chambre ayant un moyen de détecter la présence ou l'absence de liquide.

5. Un raccord selon l'une quelconque des revendications précédentes, dans lequel un des deux éléments interconnectables est fixé à un orifice de conteneur et l'autre des éléments interconnectables est fixé à un tube.

6. Un raccord selon la revendication 5, dans lequel le conteneur est un sac déformable.

## Ansprüche

1. Kupplung zum Verbinden zweier Hohlkörper, umfassend erste und zweite miteinander verbindbare Teile, die jeweils an eine Ausflußöffnung eines entsprechenden Körpers anbringbar sind, so daß ein Fluid zwischen dem Inneren der Körper fließen kann, wenn sie mittels der Kupplung verbunden sind, und um die Öffnungen im entkuppelten Zustand abzudichten, wobei das erste verbindbare Teil (87) einen Rohrabschnitt (93) umfaßt, der so angeordnet ist, daß das Innere des Rohrabschnitts mit dem Inneren des Körpers, an dem das erste Teil angebracht ist, in Verbindung steht, und der Rohrabschnitt ein geschlossenes Ende (95) und eine oder mehrere Öffnungen (97) hinter dem Ende aufweist, und das erste Teil weiter eine um den Rohrabschnitt angeordnete, in eine die Öffnungen abdeckende Lage vorgespannte Hülse (99) umfaßt, um ein Ausfließen aus dem Inneren des Rohrabschnitts zu verhindern und die Ausflußöffnung des Körpers abzudichten, wobei die Hülse (99) gegen die Vorspannung in eine die Öffnung(en) zum Ausfließen freigebende Lage verschiebbar ist; das zweite verbindbare Teil (71) einen Kolben (85) in einem hohlen Gehäuse (77) umfaßt, das so angeordnet ist, daß das Innere des Gehäuses mit dem Inneren des Körpers, an dem das zweite verbindbare Teil angebracht ist, in Verbindung steht, und der Kolben (85) in eine Lage vorgespannt ist, die eine durch einen Endabschnitt (79) des Gehäuses verlaufende Öffnung abdichtet, um die Ausflußöffnung des Körpers, an dem das zweite Teil angebracht ist, abzudichten, wobei der Kolben gegen die Vorspannung in eine die Öffnung zum Ausfließen freigebende Lage verschiebbar ist; und der Rohrabschnitt (93), die Hülse (99), der Kolben (85) und das Gehäuse (77) so geformt sind, daß nach der Verbindung der verbindbaren Teile (87, 71) das geschlossene Ende (95) des Rohrabschnitts (93) sich durch die Öffnung des Gehäuses (77) erstreckt und den Kolben (85) gegen seine Vorspannung verschiebt, während das Gehäuse (77) die Hülse (99) gegen ihre Vorspannung verschiebt, wodurch zwischen dem hohlen Inneren des Gehäuses (77) und des Rohrabschnitts (93) eine Strömung ermöglicht wird, dadurch gekennzeichnet, daß in dem ersten verbindbaren Teil (87) das geschlossene Ende (95) des Rohrabschnitts (93) und die Hülse (99) zylindrisch sind, und daß im zweiten verbindbaren Teil (71) die Öffnung durch den Endabschnitt (79) des Gehäuses (77) zylindrisch ist, wodurch das geschlossene zylindrische Ende (95) des Rohrabschnitts (93) in der zylindrischen Öffnung im Endabschnitt (79) des Gehäuses (77) einen Dichtsitz bildet.

2. Kupplung nach Anspruch 1, wobei der Kolben (85) mittels eines elastischen Elements (83) vorgespannt ist.

3. Kupplung nach einem der vorhergehenden Ansprüche, wobei der Endabschnitt (79) des Gehäuses mit einer nach außen gerichteten Umfangslippe versehen ist, die dicht um die Hülse (99) paßt.

4. Kupplung nach einem der vorhergehenden Ansprüche, wobei eins der zwei verbindbaren Teile eine Kammer umfaßt oder mit einer Kammer verbunden ist, die Mittel aufweist, um das Vorhandensein oder Nichtvorhandensein einer Flüssigkeit zu erfassen.

5. Kupplung nach einem der vorhergehenden Ansprüche, wobei eins der zwei verbindbaren Teile an einer Ausflußöffnung eines Behälters angebracht ist und das andere der verbindbaren Teile an einem Schlauch angebracht ist.

6. Kupplung nach Anspruch 5, wobei der Behälter ein verformbarer Beutel ist.

EP 0 270 302 B1

## Fig. 1.

## Fig. 2.

# Fig.3.

Fig.4.

# Fig.5.